# EUROPÄISCHE PATENTANMELDUNG

(11) **EP 4 420 815 A1**
(43) Veröffentlichungstag der Anmeldung: **28.08.2024**
(21) Anmeldenummer: 23158560.5
(22) Anmeldetag: 24.02.2023
(51) Int. Cl.: B23B 51/00, B25D 16/00, F16B 13/14, F16B 13/00

(54) **BOHRHAMMERMASCHINE UND ZUGEHÖRIGES ARBEITSVERFAHREN ZUR HERSTELLUNG EINES HINTERSCHNITTENEN BOHRLOCHS**

(71) Anmelder: Hilti Aktiengesellschaft, 9494 Schaan (LI)
(72) Erfinder: Knyrim, Maximilian, 89584 Ehingen (DE)
(74) Vertreter: Hilti Aktiengesellschaft Corporate Intellectual Property

(57) **Zusammenfassung**

Bohrhammermaschine und ein zugehöriges Arbeitsverfahren zur Herstellung eines hinterschnittenen Bohrlochs (10) für eine kombiniert kraft- und formschlüssige Verankerung eines Befestigungsmittels in einem mineralischen Werkstoff (12), umfassend die folgenden Schritte: Bereitstellung (I) einer in zumindest einem Bohrmodus (M1) und einem Hinterschnittmodus (M2) hinsichtlich Schlagfrequenz (fs) und Drehzahl (n_{B}) eines eingesetzten Bohrwerkzeugs (1) variabel ansteuerbaren Bohrhammermaschine; zeitlich gesteuerter mehrfacher Wechsel (II) zwischen dem Bohrmodus (M1) und dem Hinterschnittmodus (M2) entlang der gewünschten Bohrtiefe, wobei im Bohrmodus (M1) die Schlagfrequenz (fs) sowie die Drehzahl (n_{B}) der normalen Nenndrehzahl und zugeordneten Nennschlagfrequenz entsprechen, wohingegen im Hinterschnittmodus (M2) die Schlagfrequenz (fs) zur Ausbildung einer Hinterschnittkontur (H) gegenüber der Nennschlagfrequenz reduziert wird.

## Beschreibung

Die Erfindung betrifft ein Arbeitsverfahren zur Herstellung eines hinterschnittenen Bohrlochs für eine kombiniert kraft- und formschlüssige Verankerung eines Befestigungsmittels in einem mineralischen Werkstoff. Außerdem betrifft die Erfindung eine Bohrhammermaschine zur Durchführung des erfindungsgemäßen Verfahrens sowie auch ein Softwareprogramm mit einem Programmcode, das die Durchführung des Verfahrens auf einer elektronischen Steuereinheit einer Bohrhammermaschine gestattet. Daneben betrifft die Erfindung auch eine mit dem Arbeitsverfahren herstellbare Befestigungsanordnung, bestehend aus einem in einem mineralischen Werkstoff eingebrachten hinterschnittenen Bohrloch in Verbindung mit einem chemischen oder mechanischen Dübel als hierin kraft- und formschlüssig verankertes Befestigungsmittel.

Das Einsatzgebiet der Erfindung erstreckt sich vornehmlich auf elektrisch betriebene, handgehaltene Elektrowerkzeuge mit Schlagwerk, insbesondere Bohrhammermaschinen. Mit einer Bohrhammermaschine oder Schlagbohrmaschine wird die drehende Arbeitsbewegung eines Bohrwerkzeugs zusätzlich mit einer Hin- und Her-Bewegung überlagert, welche von einem Schlagwerk des Elektrohandwerkzeugs generiert wird. Ein solches Schlagwerk für höhere Leistungsklassen ist in an sich bekannter Weise bevorzugt pneumatisch wirkend ausgebildet. Da ein allein zylindrisches Bohrloch mangels Formschluss nur einer relativ geringen Auszugskraft standhält, wird das hier speziell interessierende hinterschnittene Bohrloch zur Realisierung höherer Auszugskräfte verwendet. Die Auszugskraft einer chemischen und teilweise auch mechanisch gebundenen Dübelverbindung korreliert näherungsweise mit dem Hinterschnittvolumen in der Mantelfläche der Bohrung, in welcher der Dübel als Befestigungsmittel eingebracht wird. Je größer also das Hinterschnittvolumen eines hinterschnittenen Bohrlochs ausfällt, desto höher ist die hieraus resultierende Auszugskraft der Befestigungsanordnung.

### Stand der Technik

Aus der DE 24 58 615 A1 geht ein Verfahren zur Herstellung eines hinterschnittenen Bohrlochs hervor, welches sich eines speziellen Bohrwerkzeugs mit elastischem Bohrerschaft bedient. Seitens des distalen Endes des Bohrerschafts befindet sich ein Bohrplättchen mit einer über den Bohrerschaft hinausgehenden Radialerstreckung, welches innerhalb des Bohrlochs eine endseitige Hinterschneidung durch Verkippen der Bohrmaschine erzeugt. Denn das Verkippen bewirkt eine elastische Biegung des vorzugsweise als Federstab aus Draht gewickelten Bohrerschafts. Allerdings lässt sich hiermit nur ein einziger Hinterschnitt im Bohrungsfußbereich erzeugen. Die zur Herstellung des Hinterschnittvolumens erforderliche Querkraft ist durch die Bohrlochlänge und die Federwirkung des elastischen Bohrerschafts begrenzt.

Die DE 30 27 408 A1 offenbart eine andere zur Herstellung eines Bohrlochs mit Hinterschneidung dienende Bohrvorrichtung, bestehend aus einem Bohrer mit radial den Bohrerschaft überragenden Bohrplättchen, eine Bohreraufnahme mit Anschlagbund, der sich in einer Mulde einer über den Bohrerschaft gestülpten Anschlagplatte zur Bildung eines Schwenklagers abstützt, und einer mit der Anschlagplatte verbindbare Bohrglocke, deren zentrische Durchgangsbohrung für die Bohreraufnahme einen Durchmesser aufweist, der einen auf den gewünschten Ausformgrad der Hinterschneidung abgestimmten Ausschwenkwinkel der Bohreraufnahme begrenzt. Der Bohrerschaft ist in der Bohreraufnahme eingeschraubt und die Stirnseite der Bohreraufnahme ist halbkugelförmig zur Bildung des Anschlagbundes abgerundet. Ein hiermit erzeugbares hinterschnittenes Bohrloch erfordert also einen entsprechenden vorrichtungtechnischen Aufwand. Außerdem lässt sich mit dieser technischen Lösung ebenfalls nur ein Bohrloch mit Hinterschnitt am Bohrungsfußbereich erzeugen.

Ein Bohrloch mit Hinterschnitt am Bohrungsfußbereich erhöht die Auszugskraft einer Dübelverbindung jedoch nur in einem geringen Maß. Wird mit Bohrmaschinen des Standes der Technik versucht, Hinterschneidungen über die Gesamtlänge des Bohrlochs hinweg zu erzeugen, ist dies gleichbedeutend mit einem gesamthaft größeren Bohrungsdurchmesser ohne zusätzliche Hinterschnitte, da eine hinreichend präzise manuelle Handhabung mit Bohrwerkzeugen des Standes der Technik kaum möglich ist. Daher erhöht sich durch eine solche eher naheliegende Maßnahme die Auszugskraft einer Befestigungsanordnung nicht.

Es ist die Aufgabe der vorliegenden Erfindung ein Arbeitsverfahren sowie eine zur Durchführung dieses Verfahrens geeignete Bohrhammermaschine zu erschaffen, welches/welche eine Hinterschnittgeometrie innerhalb eines Bohrlochs erzeugt, die die Auszugskraft der Befestigungsanordnung in reproduzierbarer Qualität signifikant erhöht.

### Offenbarung der Erfindung

Die Aufgabe wird durch ein Arbeitsverfahren gemäß Anspruch 1 gelöst. Der Anspruch 7 ist auf eine Befestigungsanordnung für ein auf diese Weise hergestelltes hinterschnittenes Bohrloch gerichtet. Der weitere nebengeordnete Anspruch 8 widmet sich einer Bohrhammermaschine, welche zur Durchführung des erfindungsgemäßen Arbeitsverfahrens dient. Schließlich ist der Anspruch 12 auf ein Softwareprogramm gerichtet, dessen Programmcode einer Durchführung des erfindungsgemäßen Arbeitsverfahrens auf einer elektronischen Steuereinheit einer Bohrhammermaschine dient.

Die Erfindung schließt die verfahrenstechnische Lehre ein, dass zur Herstellung eines hinterschnittenen Bohrlochs für eine kombiniert kraft- und formschlüssige Verankerung eines Befestigungsmittels in einem mineralischen Werkstoff zumindest die folgenden Schritte durchgeführt werden:
- Bereitstellen einer in zumindest einem Bohrmodus M1 und einem Hinterschnittmodus M2 hinsichtlich Schlagfrequenz fs und Drehzahl n_{B} eines eingesetzten Bohrwerkzeugs variabel ansteuerbaren Bohrhammermaschine;
- zeitlich gesteuerter mehrfacher Wechsel zwischen dem Bohrmodus M1 und dem Hinterschnittmodus M2 entlang der gewünschten Bohrlochtiefe, wobei
- im Bohrmodus M1 die Schlagfrequenz fs sowie die Drehzahl n_{B} mit normaler Nenndrehzahl und zugeordneter Nennschlagfrequenz betrieben wird, wohingegen
- im Hinterschnittmodus M2 die Schlagfrequenz fs zur Ausbildung zur Ausbildung einer Hinterschnittkontur H gegenüber der Nennschlagfrequenz reduziert wird.

Die Nenndrehzahl entspricht dabei vorzugsweise der maximalen Drehzahl, welche die Bohrhammermaschine für den anzufertigenden Bohrdurchmesser oder Bohrdurchmesserbereich in Verbindung mit dem zu bohrenden mineralischen Werkstoff, beispielsweise Stein oder Beton, bereitstellt. Hiermit kann die Schlagfrequenz des Schlagwerks der Bohrhammermaschine gekoppelt sein. Dies kann entweder proportional durch ein festes Übersetzungsverhältnis erfolgen oder auch variabel, indem Drehantrieb und Schlagwerk separat angetrieben und gesteuert werden und/oder ein verstellbares Getriebe zum Einsatz kommt.

Der Vorteil der erfindungsgemäßen Lösung liegt insbesondere darin, dass hiermit eine Verteilung mehrerer Hinterschnitte über die gesamte Bohrlochtiefe erfolgt. Hieraus resultiert eine entsprechend höhere Auszugskraft, um ein Befestigungsmittel, vorzugsweise einen chemischen Dübel, aus der Verankerung zu reißen.

Mit anderen Worten erfolgt gemäß Erfindung also eine maschineninterne Steuerung für eine zeitliche Abfolge von unterschiedlichen Drehzahlen n_{B} des Bohrwerkzeugs und/oder Schlagfrequenz fs. Diese zeitliche Steuerung koordiniert die Schlagleistung, die auf das Bohrwerkzeug wirkt mit der Drehbewegung. Dabei werden steuerungstechnisch mindestens zwei Modi M1 und M2 abwechseln ausgeführt. Im Bohrmodus M1 verbleibt die Schlagleistung und Bohrerdrehzahl auf dem üblichen Maximum, welches der Nenndrehzahl mit zugeordneter Schlagfrequenz entspricht. Im Hinterschnittmodus M2 wird dagegen die Schlagfrequenz fs reduziert und die Nenndrehzahl beibehalten. Basierend auf dem Effekt, dass dadurch der Bohrfortschritt in seiner Tiefe stagniert, bildet sich durch natürliche Verkippungen des Bohrwerkzeugs, welche aus der manuellen Handhabung der Bohrhammermaschine resultieren, die gewünschte Hinterschnittkontur H im aktuellen Bohrgrund aus, ehe nach nochmaligem Wechsel in den Bohrmodus M1 ein weiter nicht-hinterschnittener Bohrabschnitt entsteht. Zwischen beiden Modi M1 und M2 wird erfindungsgemäß zeitlich gesteuert gewechselt, um die angestrebte Hinterschnittverteilung über die Bohrtiefe zu erzielen. Daneben ist es auch denkbar, eine wegabhängige Steuerung entlang des Bohrfortschritts vorzunehmen.

Gemäß einer bevorzugten Ausführungsvariante des erfindungsgemäßen Arbeitsverfahrens wird der Bohrmodus M1 über eine längere Zeitspanne durchgeführt als der Hinterschnittmodus M2. Hierdurch wird entlang der Zeitachse ein hinreichend großer Bohrfortschritt erzielt, ehe dann nach Moduswechsel wiederum ein Hinterschnitt im Bohrloch erzeugt wird, welcher hinreichend zum vorangegangenen Hinterschnitt beabstandet ist. Beispielsweise kann unter normalen Verhältnissen 10 bis 20 Sekunden, vorzugsweise 15 Sekunden, Bohren im Bohrmodus M1 mit anschließendem Wechsel auf den Hinterschnittmodus M2 über 3 bis 10 Sekunden, vorzugsweise 5 Sekunden, erfolgen mit mehrfacher Wiederholung, bis die gewünschte Bohrlochtiefe erzielt ist.

Der zeitlich gesteuerte mehrfache Wechsel zwischen Bohrmodus M1 und Hinterschnittmodus M2 kann im einfachsten Fall unabhängig vom Bohrdurchmesser durchgeführt werden. Da häufig unterschiedliche Bohrerdurchmesser in einer Bohrhammermaschine mit derselben Schlagleistung verwendet werden, ist der Bohrfortschritt beim Bohren mit kleinem Durchmesser jedoch tendenziell schneller als der Bohrfortschritt mit Bohren bei großem Durchmesser. Daher kann gemäß einer alternativen Vorgabe der zeitlich gesteuerte mehrfache Wechsel zwischen dem Bohrmodus M1 und dem Hinterschnittmodus M2 abhängig vom Bohrdurchmesser durchgeführt werden, wobei sich mit aufsteigendem Bohrdurchmesser der Bohrmodus M1 und der Hinterschnittmodus M2 jeweils verlängert. Für eine verbesserte Hinterschnitterzeugung erfolgt also für jeden Bohrdurchmesser oder Bohrdurchmesserbereich eine entsprechend angepasste Zeitsteuerung. Hierfür können in einer elektronischen Steuereinheit der Bohrhammermaschine verschiedene Wertabfolgen für Bohrmodus M1 und Hinterschnittmodus M2 abgespeichert hinterlegt werden.

Vorzugsweise beginnt der zeitlich gesteuerte mehrfache Wechsel zwischen dem Bohrmodus M1 und dem Hinterschnittmodus M2 zur Herstellung eines neuen hinterschnittenen Bohrlochs oder nach Unterbrechung eines Bohrungsprozesses stets mit dem Bohrmodus M1, um zunächst eine Mindestbohrlochtiefe zu erstellen, ehe ein erster Hinterschnitt im Hinterschnittmodus M2 erzeugt wird. Eine Unterbrechung eines Bohrprozesses kann beispielsweise durch einen Akkumulatorwechsel oder eine Erholungspause des Nutzers erforderlich sein. Vorzugsweise gilt, dass kleine Bohrerdurchmesser, die einen schnelleren Bohrfortschritt ermöglichen, die Dauer der beiden Modi verkürzen. Größere Bohrerdurchmesser, die einen langsamen Bohrfortschritt bedingen, verbleiben dagegen länger im jeweiligen Modus, um eine gleichmäßige und wirkungsvolle Mehrfach-Hinterschnittkontur der Bohrlochwandung zu erzeugen.

Gemäß einer weiteren die Erfindung verbessernden Maßnahme wird vorgeschlagen, dass ein Sensor zur automatisierten Ermittlung eines Bohrdurchmessers eines mit der Bohrhammermaschine verbundenen Bohrwerkzeugs vorgesehen ist, wobei mittels des Sensors ein Reaktionssignal des Bohrwerkzeugs auf einen Energieeintrag auf das Bohrwerkzeug ermittelbar ist. Der Senor ist insbesondere als Beschleunigungssensor oder Drehzahlsensor ausgeführt und ist dazu ausgeführt nach signalverarbeitungstechnischer Auswertung insbesondere von Beschleunigungswerten zu ermitteln, welcher Bohrdurchmesser aktuell in der Bohrhammermaschine eingesetzt ist. Anhand einer hinterlegten Wertetabelle werden automatisch die entsprechenden Parameter für den Bohrmodus M1 und den Hinterschnittmodus M2 hinsichtlich zumindest Drehzahl n_{B} und Schlagfrequenz fs eingestellt.

Alternativ kann diese Information über den Bohrerdurchmesser auch manuell, beispielsweise über ein Bedientastenfeld auf der Bohrhammermaschine der elektronischen Steuereinheit zwecks Antriebssteuerung vorgegeben werden. Die Eingabe des Nutzers erfolgt in diesem Fall also direkt über die Benutzerschnittstelle der Bohrhammermaschine und wird vorzugsweise auf einer überschreibbaren Speicher-Bedientaste hinterlegt. Damit können mehrere Speichertasten mehrere Zustände abspeichern, welche bei Bedarf abgerufen werden. Alternativ hierzu kann die manuelle Eingabe auch indirekt durchgeführt werden. Hierfür kann beispielsweise eine App eines Smartphones verwendet werden, welche vorzugsweise drahtlos über die üblichen Funkübertragungsstrecken mit der Bohrhammermaschine kommunikativ verbunden ist. Seitens des Smartphones kann insoweit die erforderliche Bedieninformation optional auf einer überschreibbaren Speicher-Bedientaste hinterlegt sein oder aber der Hauptbetriebsmodus der Bohrhammermaschine wird auf ein Smartphone-Kommando ohne zusätzliche Speichertasten direkt auf die Auswahl der unterschiedlichen Modi angepasst. Daneben ist es auch denkbar, die Eingabe eines Bohrerdurchmesssers nicht durch den Nutzer vornehmen zu lassen, sondern diesen Parameter per Barcode-Scan mit einem Smartphone oder dergleichen einzulesen, welches die erfasste Information wiederum drahtlos an die elektronische Steuereinheit der Bohrhammermaschine überträgt.

Zur Durchführung der vorstehend beschriebenen Funktionalitäten ist das erfindungsgemäße Verfahren vorzugsweise in einem Softwareprogramm verkörpert, dessen Programmcode die Durchführung des erfindungsgemäßen Verfahrens unter Berücksichtigung der variablen Eingabewerte auf der elektronischen Steuereinheit der Bohrhammermaschine oder im Sinne einer verteilten Intelligenz zumindest teilweise auf einem hiermit verbundenen Smartphone durchführt.

### Detailbeschreibung anhand Zeichnung

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematische Darstellung einer Bohrhammermaschine zur Herstellung eines auf erfindungsgemäße Weise hinterschnittenen Bohrlochs,
- Fig. 2: einen schematischen Längsschnitt einer Befestigungsanordnung auf Basis eines erfindungsgemäß hergestellten hinterschnittenen Bohrlochs,
- Fig. 3: einen schematischen Ablaufplan eines Arbeitsverfahrens, das mit einer Bohrhammermaschine gemäß Fig. 1 ausgeführt wird,
- Fig. 4: eine graphische Darstellungssequenz der Parameter Bohrlochtiefe T, Drehzahl n_{B} sowie Schlagfrequenz fs über die Zeit zur Erzeugung eines hinterschnittenen Bohrlochs mit dem Verfahren gemäß Fig. 2, und
- Fig. 5: eine bildliche Darstellung eines exemplarischen Bedientastenfelds einer Bohrhammermaschine zur Auswahl verschiedener Bedienoptionen.

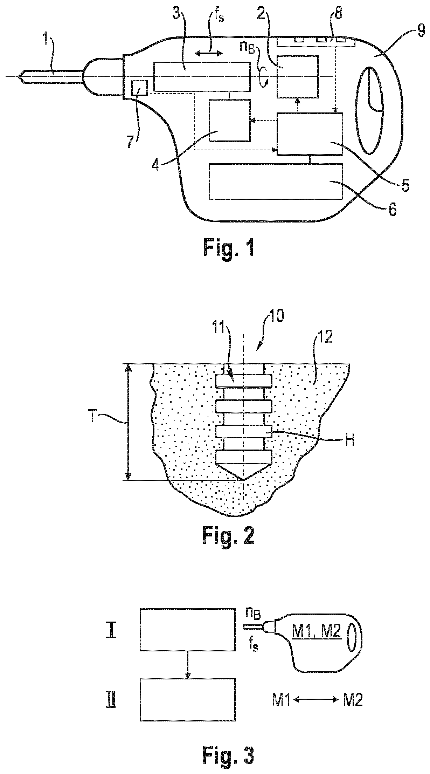

Gemäß Fig. 1 ist in der exemplarisch schematisch dargestellten Bohrhammermaschine ein Bohrwerkzeug 1 in Form eines Schlagbohrers eingesetzt. Ein erster elektrischer Antriebsmotor 2 dient der Generierung einer Drehzahl n_{B} des Bohrwerkzeugs 1. Hiermit kombiniert ist ein separat über einen zweiten elektrischen Antriebsmotor 4 unabhängig vom ersten elektrischen Antriebsmotor 2 angetriebenes Schlagwerk 3 zur Erzeugung einer Hin- und Her-Bewegung mit einer Schlagfrequenz fs, welche der Drehbewegung überlagert wird. Die koordinierte Ansteuerung der Komponenten wird nach Maßgabe einer elektronischen Steuereinheit 5 durchgeführt, welche über eine elektrische Akkumulatoreinheit 6 gemeinsam mit den beiden Antriebsmotoren 3 und 4 mit elektrischer Energie versorgt wird.

Außerdem ist am werkzeugseitigen Endbereich des Antriebsstrangs ein Sensor 7 zur automatischen Ermittlung des aktuellen Bohrerdurchmessers das Bohrwerkzeug 1 anhand maschinendynamischer Werte vorgesehen, welcher ebenfalls mit der elektronischen Steuereinheit 5 verbunden ist. Ferner steht die elektronische Steuereinheit 5 mit einem außen am Maschinengehäuse 9 der Bohrhammermaschine angeordneten Bedientastenfeld 8 zur manuellen Vorgabe von Maschinenparametern in Verbindung.

Gemäß Fig. 2 lässt sich mit einer vorstehend beschriebenen Bohrhammermaschine ein hinterschnittenes Bohrloch 10 für eine kombiniert kraft- und formschlüssige Verankerung eines Befestigungsmittels in Form eines Dübels 11 in einem mineralischen Werkstoff 12 - hier Beton - herstellen. Das hinterschnittene Bohrloch 10 umfasst hierfür eine abwechselnde Folge von ersten Bereichen kleineren Durchmessers mit zweiten Bereichen größeren Durchmessers, welche die Hinterschnittkontur H bilden.

Gemäß Fig. 3 wird ein solches hinterschnittenes Bohrloch 10 derart hergestellt, dass in einem ersten Schritt zunächst eine Bereitstellung I einer in zumindest einem Bohrmodus M1 und einem Hinterschnittmodus M2 hinsichtlich Schlagfrequenz fs und Drehzahl n_{B} eines eingesetzten Bohrwerkzeugs variabel ansteuerbare Bohrhammermaschine erfolgt.

Nach dem Start des Bohrens wird beginnend mit dem Bohrmodus M1 zeitlich gesteuert ein mehrfacher Wechsel II zwischen diesem und dem Hinterschnittmodus M2 entlang der gewünschten Bohrlochtiefe durchgeführt, wobei im Bohrmodus M1 die Schlagfrequenz fs sowie die Drehzahl n_{B} mit normaler Nenndrehzahl und zugeordnete Nennschlagfrequenz - hier mit Maximum - betrieben wird, wohingegen im Hinterschnittmodus M2 die Schlagfrequenz fₛ zur Ausbildung einer Hinterschnittkontur H gegenüber der Nennschlagfrequnez reduziert wird. Die jeweiligen exemplarischen Zeitspannen sind wie folgt:

| **Bohr Ø [mm]** | **M1 [s]** | **M2 [s]** |
|---|---|---|
| 12 - 16 mm | a x 15 s | a x 5 s |
| 17 - 22 mm | a x 18 s | a x 6 s |
| 23 - 30 mm | a x 22 s | a x 7 s |
| 31 - 40 mm | a x 30 s | a x 10 s |
| > 40 mm | a x 40s | a x 15s |

Somit wird der zeitlich gesteuerte Wechsel zwischen Bohrmodus M1 und Hinterschnittmodus M2 abhängig von Bohrdurchmesserbereichen durchgeführt, wobei sich mit aufsteigendem Bohrdurchmesser der Bohrmodus M1 und der Hinterschnittmodus M2 jeweils verlängern. Der Faktor a ist ein typabhängig maschinenspezifischer Wert, der vorzugsweise updatefähig in der jeweiligen Bohrhammermaschine hinterlegt ist.

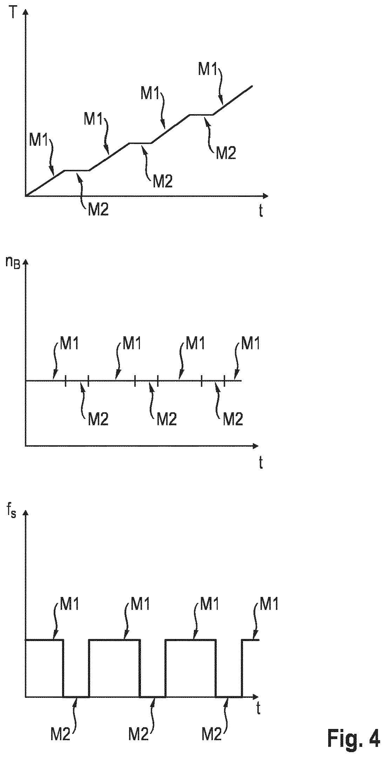

Die Fig. 4 veranschaulicht eine zyklische Verteilung von drei exemplarischen Hinterschnitten über die Bohrlochtiefe T. Der Bohrfortschritt wird zur Herstellung von Hinterschnitten H1 bis H3 unterbrochen, da die Drehzahl n_{B} des Bohrwerkzeugs im Hinterschnittmodus M2 über eine kürzere Zeit mit abgeschalteter Schlagfrequenz fs durchgeführt wird.

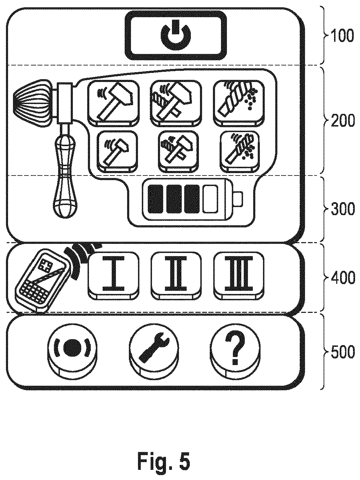

Gemäß Fig. 5 ist ein exepmplarisches Bedientastenfeld 8 der Bohrhammermaschine in mehrere Bereiche unterteilt. In einem ersten Bereich 100 ist ein AN-/AUS-Schalter als Hauptschalter der Bohrhammermaschine angeordnet. Der darauffolgende Bereich 200 gestattet die Auswahl manueller Werkzeugmodi, wie Schlagbohren, Meißeln, Bohren oder das erfindungsgemäße Hinterschnittbohren. Im dritten Bereich 300 wird der Status der Energieversorgung, speziell der Ladestatus eines Akkumulators der Bohrhammermaschine angezeigt. Der vierte Bereich 400 umfasst mehrere auswählbare überschreibbare Speichertasten. Schließlich beinhaltet der fünfte Bereich 500 generelle Informationsanzeigen über den Maschinenstatus.

Die Erfindung ist nicht beschränkt auf das vorstehend beschriebene Ausführungsbeispiel. Es sind vielmehr auch Abwandlungen denkbar, welche vom Schutzbereich der nachfolgenden Ansprüche mit umfasst sind. So ist es beispielsweise auch möglich, eine Bohrhammermaschine anstelle oder zusätzlich zu einem Bedientastenfeld drahtlos, beispielsweise über eine Smartphone-App, in zumindest dem vorstehend vorgestellten Funktionsumfang zu bedienen.

### BEZUGSZEICHENLISTE

- 1: Bohrwerkzeug
- 2: erster Antriebsmotor
- 3: Schlagwerk
- 4: zweiter Antriebsmotor
- 5: Steuereinheit
- 6: Akkumulatoreinheit
- 7: Sensor
- 8: Bedientastenfeld
- 9: Maschinengehäuse
- 10: Bohrloch
- 11: Dübel
- 12: mineralischer Werkstoff

- 100: erster Bereich
- 200: zweiter Bereich
- 300: dritter Bereich
- 400: vierter Bereich
- 500: fünfter Bereich

- M1: Bohrmodus
- M2: Hinterschnittmodus
- H: Hinterschnittkontur
- T: Bohrlochtiefe
- n_{B}: Drehzahl Antrieb
- fs: Schlagfrequenz

## Patentansprüche

1. Verfahren zur Herstellung eines hinterschnittenen Bohrlochs (10) für eine kombiniert kraft- und formschlüssige Verankerung eines Befestigungsmittels in einem mineralischen Werkstoff (12), umfassend die folgenden Schritte:
- Bereitstellung (I) einer in zumindest einem Bohrmodus (M1) und einem Hinterschnittmodus (M2) hinsichtlich Schlagfrequenz (fs) und Drehzahl (n_{B}) eines eingesetzten Bohrwerkzeugs (1) variabel ansteuerbaren Bohrhammermaschine;
- Zeitlich gesteuerter mehrfacher Wechsel (II) zwischen dem Bohrmodus (M1) und dem Hinterschnittmodus (M2) entlang der gewünschten Bohrtiefe, wobei
- im Bohrmodus (M1) die Schlagfrequenz (fs) sowie die Drehzahl (n_{B}) mit normaler Nenndrehzahl und zugeordneter Nennschlagfrequenz betrieben wird, wohingegen
- im Hinterschnittmodus (M2) die Schlagfrequenz (fs) zur Ausbildung einer Hinterschnittkontur (H) gegenüber der Nennschlagfrequenz reduziert wird.

2. Verfahren nach Anspruch 1,
**dadurch gekennzeichnet, dass** der Bohrmodus (M1) über eine längere Zeitspanne durchgeführt wird als der Hinterschnittmodus (M2).

3. Verfahren nach Anspruch 1 oder 2,
**dadurch gekennzeichnet, dass** der zeitlich gesteuerte mehrfache Wechsel zwischen dem Bohrmodus (M1) und dem Hinterschnittmodus (M2) unabhängig vom Bohrdurchmesser durchgeführt wird.

4. Verfahren nach Anspruch 1 oder 2,
**dadurch gekennzeichnet, dass** der zeitlich gesteuerte mehrfache Wechsel zwischen dem Bohrmodus (M1) und dem Hinterschnittmodus (M2) abhängig vom Bohrdurchmesser durchgeführt wird, wobei sich mit aufsteigendem Bohrdurchmesser der Bohrmodus (M1) und der Hinterschnittmodus (M2) jeweils verlängert.

5. Verfahren nach Anspruch 4,
**dadurch gekennzeichnet, dass** ein Sensor (7) zur automatisierten Ermittlung eines Bohrdurchmessers eines mit der Bohrhammermaschine verbundenen Bohrwerkzeugs (1) vorgesehen ist, wobei mittels des Sensors (7) ein Reaktionssignal des Bohrwerkzeugs (1) auf einen Energieeintrag auf das Bohrwerkzeug (1) ermittelbar ist.

6. Verfahren nach einem der vorstehenden Ansprüche,
**dadurch gekennzeichnet, dass** der zeitlich gesteuerte mehrfache Wechsel zwischen dem Bohrmodus (M1) und dem Hinterschnittmodus (M2) zur Herstellung eines neuen hinterschnittenen Bohrlochs (10) oder nach Unterbrechung eines Bohrungsprozesses stets mit dem Bohrmodus (M1) beginnt.

7. Befestigungsanordnung, bestehend aus einem in einem mineralischen Werkstoff mit einem Verfahren nach einem der vorstehenden Ansprüche eingebrachten hinterschnittenen Bohrloch (10) sowie einem chemischen oder mechanischen Dübel (11) für ein hierin kraft- und formschlüssig verankertes Befestigungsmittel.

8. Bohrhammermaschine mit mindestens einem elektrischen Antriebsmotor (2, 4) zur Generierung einer Drehzahl (n_{B}) eines eingesetzten Bohrwerkzeugs (1) sowie mit einem Schlagwerk (3) zur zusätzlichen Beaufschlagung des Bohrwerkzeugs (1) mit einer zugeordneten Schlagfrequenz (fs) nach Maßgabe einer elektronischen Steuereinheit (5) zur Durchführung des Verfahrens nach einem der vorstehenden Ansprüche 1 bis 6.

9. Bohrhammermaschine nach Anspruch 8,
**dadurch gekennzeichnet, dass** ein erster Antriebsmotor (2) zum Drehantrieb des Bohrwerkzeugs (1) sowie ein zweiter Antriebsmotor (4) zum Antrieb des Schlagwerks (3) vorgesehen ist.

10. Bohrhammermaschine nach einem der Ansprüche 8 oder 9,
**dadurch gekennzeichnet, dass** ein Sensor (7) zur automatischen Ermittlung des aktuellen Bohrdurchmessers des Bohrwerkzeugs (1) vorgesehen ist, der mit der elektronischen Steuereinheit oder Regeleinheit (5) verbunden ist.

11. Bohrhammermaschine nach einem der Ansprüche 8 bis 10,
**dadurch gekennzeichnet, dass** ein Bedientastenfeld (8) zur manuellen Vorgabe des aktuellen Bohrdurchmessers des Bohrwerkzeugs (1) vorgesehen ist, das mit der elektronischen Steuereinheit oder Regeleinheit (5) verbunden ist.

12. Softwareprogramm mit Programmcode zur Durchführung des Verfahrens nach einem der Ansprüche 1 bis 6 auf einer elektronischen Steuereinheit (5) einer Bohrhammermaschine nach einem der Ansprüche 8 bis 11.
